# EUROPÄISCHE PATENTSCHRIFT

(11) **EP 1 193 890 B1**
(45) Veröffentlichungstag und Bekanntmachung des Hinweises auf die Patenterteilung: **07.11.2007**
(21) Anmeldenummer: 01122223.9
(22) Anmeldetag: 17.09.2001
(51) Int. Cl.: H04B 3/46, H04M 3/30, G01R 27/06, G01R 31/02, H04L 12/40

(54) **Verfahren und Vorrichtung zur Leitungsdiagnose eines Bussystems**
Method and apparatus for line transmission diagnostic of a bus system
Méthode et appareil pour diagnostiquer une ligne de transmission d'un système de bus

(30) Priorität: 29.09.2000 DE 10048741
(43) Veröffentlichungstag der Anmeldung: 03.04.2002
(73) Patentinhaber: SIEMENS AKTIENGESELLSCHAFT, 80333 München (DE)
(72) Erfinder: Makuth, Jens, 90537 Feucht (DE); Schirl, Werner, 90411 Nuernberg (DE); Schuster, Armin, 90427 Nuernberg (DE); Spichtinger, Klaus, 92551 Stulln (DE); Weber, Karl, Dr., 90518 Altdorf (DE)

(56) Entgegenhaltungen:
- WO-A-90/15998
- WO-A-94/22030
- DE-C1- 4 225 595
- US-A- 4 638 244

## Beschreibung

Die Erfindung bezieht sich auf ein Verfahren zur Leitungsdiagnose eines Bussystems nach dem Prinzip der Reflexionsmessung. Sie bezieht sich weiter auf eine Vorrichtung zur Durchführung des Verfahrens.

Ziel einer derartigen Leitungsdiagnose ist das Erkennen und Lokalisierung von Leitungsfehlern. Bei der Anwendung des Prinzips der Reflexionsmessung wird die Erkenntnis ausgenutzt, dass sich ein Leitungsfehler oder eine Störstelle entlang einer Busleitung durch eine lokale Änderung des Wellenwiderstandes auswirkt und daher einen Impuls oder ein Signal reflektiert. So wird der Wellenwiderstand z. B. bei einem Kurzschluß niederohmig und bei einer Unterbrechung hochohmig. Aus der Zeitspanne zwischen dem Aussenden eines Impulses bzw. eines Signals und dem Eintreffen der Reflexion läßt sich die Entfernung eines Leitungsfehlers bzw. einer Störstelle ermitteln. Darüber hinaus können aus der Polarität der Reflexion Aussagen über die Ursache des Leitungsfehlers abgeleitet werden. Problematisch ist jedoch die Erkennung und Lokalisierung von Leitungsfehlern, die in unmittelbarer Nähe zur den jeweiligen Messimpuls oder das initiierende Signal aussendenden Diagnosevorrichtung auftreten.

Bei einem aus der DE 197 26 539 A1 bekannten Verfahren und einer entsprechenden Schaltungsanordnung zur Lokalisierung eines Kurzschlusses oder eines Kabelbruches in einem Zweidraht-Bus-System wird - unter Anwendung des Prinzip der Reflexionsmessung - das Bussystem an wenigstens einem Punkt mit einem Impuls hoher Steilheit beaufschlagt. Anhand der Laufzeit des Impulses und der sich an der Fehler- oder Störstelle einstellenden Reflexion wird eine Lokalisierung des Leitungsfehlers vorgenommen.

Das bekannte Verfahren geht davon aus, dass ein Kurzschluss oder ein Kabelbruch zumindest einer der beiden Busleitungen bereits erkannt worden ist. Zur Lokalisierung des Leitungsfehlers wird gleichzeitig mit der Eingabe eines Impulses in die entsprechende Busleitung eine Gatterkette eines Shiftregisters gestartet. Das Reflexionssignal stoppt den Signaldurchlauf durch die Gatterkette, so dass aus der Anzahl der gesetzten Shiftregister und damit der durchlaufenen Gatter bekannter Durchlaufzeit der Fehlerort mit einer Auflösegenauigkeit im cm-Bereich ermittelbar ist.

Nachteilig bei diesem bekannten Verfahren und dieser bekannten Schaltungsanordnung ist jedoch, dass aufgrund des erforderlichen aktiven Sendens eines Messimpulses oder eines initiierenden Signals zur Laufzeitermittlung eine Leitungsdiagnose im laufenden Nutzbetrieb nicht möglich ist. Außerdem ist infolge der endlichen Durchlaufzeit zwischen zwei Gattern eine Ortsungenauigkeit in der Größenordnung eines Gatterdurchlaufs praktisch unvermeidlich.

In der JP 000-55972 A oder auch in der DE 197 16 963 A1 werden eine Vorrichtung und ein Verfahren beschrieben, bei dem die Art des Auftretens einer Störung, und damit auch die Richtung zur Störquelle, bestimmt wird. Die Bestimmung erfolgt durch Messung der von der Störung ausgehenden Signale an zwei verschiedenen Orten. Allerdings wird bei diesem Verfahren ein ohne Zutun auf der Übertragungsleitung entstandenes Signal (z.B. Lichtbogen) ausgewertet und nicht ein für die Messung von einem Bustreiber speziell ausgesendetes Messsignal.

Der Erfindung liegt daher die Aufgabe zugrunde, ein Verfahren zur Leitungsdiagnose eines Bussystems anzugeben, das eine besonders zuverlässige Erkennung und/oder Lokalisierung eines Leitungsfehlers einer Busleitung mit besonders hoher Auflösungsgenauigkeit des Fehlerortes ermöglicht. Darüber hinaus soll eine zur Durchführung des Verfahrens besonders geeignete Vorrichtung angegeben werden. Bezüglich des Verfahrens wird diese Aufgabe erfindungsgemäß gelöst durch die Merkmale des Anspruchs 1. Dazu durchläuft ein von einem Bustreiber ausgesendetes Signal parallel ein ausgangsseitig mit einer Busleitung verbundenes erstes Verzögerungsglieder und ein ausgangsseitig mit einem Abschlußwiderstand oder einem Abschlussspannungsteiler beschaltetes zweites Verzögerungsglied. Ein auf der Busleitung erzeugtes Reflexionssignal wird an einen ersten Eingang eines Komparators direkt und an dessen zweiten Eingang nach Durchlaufen der beiden Verzögerungsglieder geführt. Infolge des dabei am Komparator entstehenden Differenzsignals wird das dort eintreffende Reflexionssignal detektiert.

Die Erfindung geht dabei von der Überlegung aus, dass bei Anwendung der sogenannten Gabelschaltung auf das an sich bekannte Reflexionsverfahren zur Detektion von Fehlern oder Störungen in busgekoppelten Systemen eine besonders hohe Auflösung des Fehlerortes erreicht werden kann. Das an sich in der Fernmelde- oder Telekommunikationstechnik angewendete Prinzip der Gabelschaltung oder der Fernsprechgabel ist beispielsweise im "Lexikon der Feinwerktechnik", Band 13, deutsche Verlags-Anstalt GmbH, Stuttgart, 1968, Seite 369, beschrieben. In der Fernmelde- bzw. Telekommunikationstechnik soll die Gabelschaltung verhindern, dass Sprechströme aus dem ankommenden Teil einer Vierdrahtleitung einer Fernsprech-Fernverbindung in den abgehenden Teil der Vierdrahtleitung übertragen und zum sprechenden Teilnehmer zurückfließen.

In Anwendung auf das Reflexionsprinzip zur Detektion von Fehlern oder Störungen in busgekoppelten Systemen ist es in besonders einfacher und zuverlässiger Art und Weise möglich, eine Störstelle auch im unmittelbaren Nahbereich, d.h. quasi direkt hinter einer Diagnose- oder Messeinrichtung, die einen entsprechenden Messimpuls oder ein initiierendes Signal aussendet, auf der jeweiligen Busleitung zu erfassen. Grund hierfür ist, dass ein an einer Störstelle reflektiertes Signal auch dann detektiert werden kann, wenn das initiierende Signal noch nicht vollständig abgeschickt worden ist.

Hierzu wird das initiierende Signal am Komparator praktisch neutralisiert, indem dieses an beiden Komparatoreingängen gleichzeitig ansteht, während ein infolge einer Störstelle erzeugtes Reflexionssignal einerseits direkt und andererseits zweifach verzögert am Komparator ansteht. Somit gibt es bei Verwendung der Gabelschaltung praktisch keinen Totbereich, so dass Störstellen schon in Entfernungen von einigen Millimetern von der das initiierende Signal aussendenden Messeinrichtung erfasst werden können. Demgegenüber ist bei herkömmlichen auf dem Reflexionsprinzip beruhenden Verfahren zur Störstellendetektion oder Leitungsdiagnose praktisch nicht zu vermeiden, dass eine nahegelegene Störstelle ein Reflexionssignal bereits erzeugt, wenn das initiierende Signal noch nicht vollständig abgeschickt worden ist. Die Überlappung dieser beiden in entgegengesetzter Richtung laufenden Signale lässt somit eine Unterscheidung und insbesondere eine Detektion des reflektierten Signals oder Reflexionssignal nicht mehr zu.

Gemäß einer besonders vorteilhaften Weiterbildung wird zur Reflexionsmessung ein vom Bustreiber gesendetes Datentelegramm als initiierendes Messsignal verwendet. Durch dieses nachfolgend auch als passive Reflexionsmessung bezeichnete Messprinzip ist eine rückwirkungsfreie Leitungsdiagnose des Busssystems möglich. Dies bedeutet, dass sowohl die vom Bussystem umfassten passiven Teilnehmer, d.h. diejenigen Teilnehmer, die zunächst Datentelegramme oder Nutzsignale lediglich empfangen und erst dann auch selbst senden, als auch die aktiven Teilnehmer, die von sich aus Datentelegramme senden können, praktisch durch das Messverfahren nicht beeinflusst werden. Dadurch bleibt der Busbetrieb durch das Messverfahren ungestört. Vorteilhafterweise muß somit kein aktives Messsignal generiert werden. Vielmehr wird das oder jedes Datentelegramm - und somit das Nutzsignal selbst - als Messsignal verwendet.

Bei der passiven Reflexionsmessung wird die Erkenntnis ausgenutzt, dass ein über die oder jede Busleitung gesendetes Datentelegramm sich als Folge von Messimpulsen betrachten lässt, und dass zwischen den als Nutzsignal über den Bus oder die Busleitungen geschickten Datentelegrammen stets eine definierte Pause vorgesehen ist. Diese Pause ist insbesondere beim sogenannten PROFIBUS als Feldbus lang genug, um zu vermeiden, dass sich die Folge der ausgesendeten Datentelegramme mit der Folge der dadurch ausgelösten, in entgegengesetzter Richtung laufenden Reflexionssignale derart überlagern, dass nicht mehr unterschieden werden kann, welches Datentelegramm die Reflexion, d.h. den Anfang des Reflexionssignals ausgelöst hat.

Das am Komparator detektierte Differenzsignal infolge des verzögerten Eintreffens des Reflexionssignals an einem der Komparatoreingänge wird als Endzeitpunkt einer Laufzeitmessung herangezogen, die mit dem Startzeitpunkt des ausgesendeten (initiierenden) Signals beginnt. Aus der durch die zweifache Kabellaufzeit (in m) dividierten gemessenen Laufzeit wird der Reflexionsort und damit der Fehlerort der Leitungsstörung mit einer Genauigkeit im Millimeterbereich und damit praktisch punktgenau bestimmt.

Zweckmäßigerweise wird das Startbit des ersten Zeichens des Datentelegramms als initiierendes Signal herangezogen. Um eine Reflexion infolge dieses Startbits, d. h. der entsprechenden Startbitflanke von einer Reflexion einer dieser Startbitflanke vorangehenden Einschaltflanke infolge einer Einschaltung des Bustreibers eines Busteilnehmers unterscheiden zu können, wird eine Ansprechschwelle des Komparators - beginnend mit dem Startzeitpunkt des initiierenden oder ausgesendeten Signals, d.h. beginnend mit der Startbitflanke - nach einer vorgegebenen Funktion herabgesetzt.

Hintergrund hierzu ist, dass das am Komparatoreingang erzeugte Differenzsignal die Komparatorschwelle überschreiten muss, um als Reflexionssignal detektiert zu werden. Diese Schwelle ist jedoch für eine im Fernbereich erzeugte Reflexion, deren Signal entsprechend schwach am Komparator ankommt, zu hoch. Da andererseits das Nutzsignal, d.h. das Startbit des ersten Zeichens eines Datentelegramms als initiierendes Signal für eine Reflexionsmessung herangezogen wird und die der entsprechenden Startbitflanke vorangehende Einschaltflanke eine Reflexion verursacht, muß die Ansprechschwelle des Komparators eine Mindesthöhe aufweisen, um diese Reflexion infolge der Einschaltflanke zu unterdrücken. Die Mindestschwellenhöhe bedingt jedoch, dass ein pegelmäßig unter diesem Schwellwert liegendes, zu erfassendes Reflexionssignal aus dem Fernbereich vom Komparator nicht detektiert wird. Wird nun die Ansprechschwelle des Komparators mit dem Auftreten der Startbitflanke, d.h. mit dem Startzeitpunkt der Reflexions- oder Laufzeitmessung über die Zeit oder über die Entfernung vorzugsweise exponentiell herabgesetzt, so erfolgt quasi eine dynamische Änderung oder Anpassung der Ansprech- oder Komparatorschwelle.

Alternativ oder zusätzlich kann mittels einer Dämpfungsschaltung, beispielsweise in Form eines Tiefpasses oder eines Dämpfungskondensators, die Einschaltflanke gedämpft werden. Die Dämpfungsschaltung ist dann beim Auftreten der Einschaltflanke für eine Zeitdauer wirksam, die vor dem Auftreten des Startbits bzw. der Startbitflanke des zu übertragenden Datentelegramms endet.

In zweckmäßiger Weiterbildung wird mittels der Reflexionsmessung, insbesondere mittels der passiven Reflexionsmessung, auch die Bus- oder Bussegmenttopologie in besonders einfacher und zuverlässiger Art und Weise ermittelt. Dazu wird die Erkenntnis ausgenutzt, dass sich ein sendender Busteilnehmer am Bus wie eine Störstelle verhält. Ein sendender Teilnehmer verringert nämlich seinen Innenwiderstand beim Senden von unendlich (∞) auf etwa 40Ω. Wird ein Messimpuls oder -signal auf die Busleitung gegeben, so wird dieser Impuls bzw. dieses Signal von einem sendenden Teilnehmer reflektiert.

Zweckmäßigerweise wird daher zur Ermittlung der Bustopologie einem oder jedem Busteilnehmer zunächst ein Messtelegramm und anschließend ein Messsignal gesendet, das dann von dem oder jedem weiteren Busteilnehmer reflektiert wird, während dieser auf das Messtelegramm antwortet. Das Messtelegramm wird zweckmäßigerweise von einem nachfolgend als Messinitiator bezeichneten aktiven Busteilnehmer des Bussystems gesendet, während das Messsignal von einem nachfolgend als Diagnoserepeater bezeichneten passiven Busteilnehmer des Bussystems gesendet wird. Aus der Zeitspanne zwischen dem Senden des Messsignals und dem Eintreffen des Reflexionssignals beim Diagnoserepeater wird die Entfernung zwischen diesem und dem jeweiligen Busteilnehmer bestimmt.

In vorteilhafter Weiterbildung wird die Entfernung des oder jedes Busteilnehmers vom Diagnoserepeater in einer Topologietabelle hinterlegt. Wenn dann während der Störstellenermittlung oder Leitungsdiagnose eine Störstelle bzw. ein Leitungsfehler ermittelt wird, wird anhand der Topologietabelle festgestellt, zwischen welchen Busteilnehmern die Störstelle bzw. der Leitungsfehler liegt.

Bezüglich der Vorrichtung wird die genannte Aufgabe erfindungsgemäß gelöst durch die Merkmale des Anspruchs 9. Vorteilhafte Ausgestaltungen sind Gegenstand der auf diesen rückbezogenen Unteransprüche.

Die mit der Erfindung erzielten Vorteile bestehen insbesondere darin, dass durch die Verknüpfung der Prinzipien der Gabelschaltung und der Reflexionsmessung in besonders einfacher und zuverlässiger Art und Weise sowohl die Bustopologie eines Bussystems, das vorzugsweise einen zwei Leitungen umfassenden Bus aufweist, als auch eine Leitungsdiagnose zum Erkennen und Lokalisieren von Störstellen oder Leitungsfehlern möglich ist. Durch Anwendung der passiven Reflexionsmessung ist darüber hinaus eine Leitungsdiagnose auch während des Busbetriebs rückwirkungsfrei möglich. Das erfindungsgemäße Verfahren und die erfindungsgemäße Vorrichtung eignen sich daher besonders für Feldbussysteme, insbesondere für den sogenannten PROFIBUS.

Nachfolgend werden Ausführungsbeispiele der Erfindung anhand einer Zeichnung näher erläutert. Darin zeigen:
- FIG 1: schematisch einen eine Messschaltung zur Leitungsdiagnose aufweisenden Busteilnehmer eines Bussystems,
- FIG 2: ein Bussystem mit einem Busteilnehmer gemäß FIG 1 und einem Messinitiator zur Topologieermittlung, und
- FIG 3: eine bevorzugt im Busteilnehmer gemäß FIG 1 hinterlegte Topologietabelle.

Einander entsprechende Teile sind in allen Figuren mit den gleichen Bezugszeichen versehen.

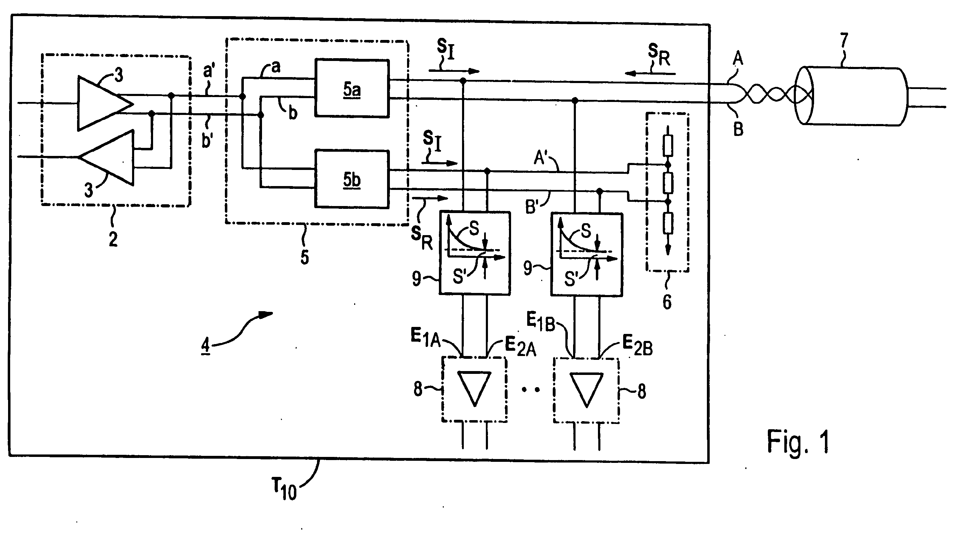

Der in FIG 1 dargestellte und nachfolgend als Diagnoserepeater 1 bezeichnete Busteilnehmer T10 weist einen Bus- oder Leitungstreiber 2 mit zwei Operationsverstärkern 3 und eine nach Art eine Gabelschaltung ausgeführten Messschaltung 4 auf. Die Messschaltung 4 umfasst einen Verzögerungsbaustein 5, der einerseits mit einem Abschlusswiderstand oder einem Abschlussspannungsteiler 6 beschaltet und andererseits mit einer zwei Leitungen A und B aufweisenden Busleitung 7 verbunden ist. Der Abschlusswiderstand 6 dient zur Voreinstellung des Potentials der Leitungen A und B der Busleitung 7.

Der Verzögerungsbaustein 5 umfasst ein erstes Verzögerungsglied 5a, das ausgangsseitig an die Leitungen A und B der Busleitung 7 geführt ist. Der Verzögerungsbaustein 5 weist zudem ein zweites Verzögerungsglied 5b auf, das ausgangsseitig über Leitungen A' bzw. B' mit dem Abschlusswiderstand 6 verbunden ist. Eingangsseitig sind die beiden Verzögerungsglieder 5a und 5b über Leitungen a bzw. b miteinander verbunden. An diese Leitungen oder Verbindungen a und b ist der Bustreiber 2 ausgangsseitig über Leitungen a' bzw. b' angeschlossen. An die Verzögerungsglieder 5a und 5b sind ausgangsseitig eine Anzahl von Komparatoren 8 angeschlossen, deren Eingänge E_{1A}, E_{2A} und E_{1B}, E_{2B} mit den Leitungen A und A' bzw. B und B' verbunden sind. Somit ist sowohl das erste Verzögerungsglied 5a als auch das zweite Verzögerungsglied 5b ausgangsseitig mit einem Eingang E_{1A}, E_{2A} bzw. E_{1B}, E_{2B} eines gemeinsamen Komparators 8 verbunden. Die Verzögerungsglieder 5a und 5b sind in nicht näher dargestellter Art und Weise als Laufzeitketten aus einer Anzahl von ohmschen Widerständen und Kondensatoren mit vorgebbarer Verzögerungszeit τ ausgeführt.

Um sowohl positive als auch negative Impulse oder Signale, die über die Busleitung 7 geführt werden, detektieren und zwischen diesen unterscheiden zu können, umfaßt die Messschaltung 4 in nicht näher dargestellte Art und Weise entsprechend vier Komparatoren 8, von denen jeweils zwei Komparatoren 8 eingangsseitig an die Leitungen A,A' und B,B' auf der Ausgangsseite der Verzögerungsglieder 5a bzw. 5b angeschlossen sind. Jedem Komparator 8 der Messschaltung 4 ist ein Anpassungsglied 9 zur dynamischen Anpassung der Komparatorschwelle vorgeschaltet oder zugeordnet.

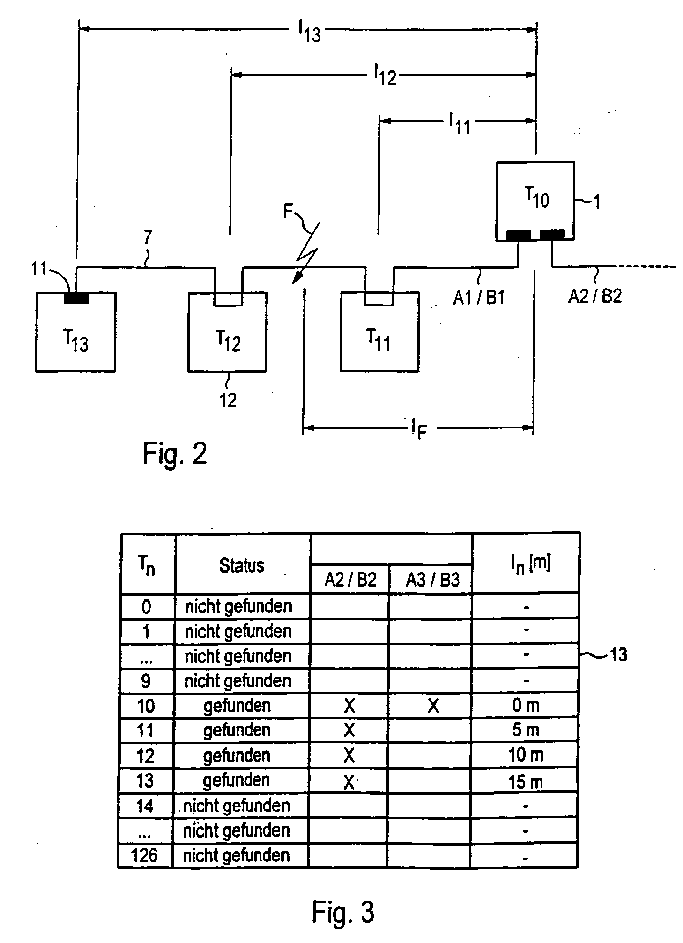

Zum Erkennen von Störstellen oder Leitungsfehlern F (FIG 2) auf der Busleitung 7, d.h. auf dessen Leitung A und/oder B, sendet der Bustreiber 2 ein Messsignal S_{I} über das Verzögerungsglied 5 in die Busleitung 7. Bei der erfindungsgemäß passiven Reflexionsmessung ist dies ein Messtelegramm, d.h. ein das Nutzsignal bildendes Datentelegramm. Gleichzeitig wird dieses nachfolgend als initiierendes Messsignal S_{I} bezeichnete Datentelegramm im dem zweiten Verzögerungsglied 5b nachgeschalteten Abschlusswiderstand 6 praktisch absorbiert, während dieses Messsignal S_{I} über das zweite Verzögerungsglied 5b in die Busleitung 7 eingespeist wird. Der an die entsprechende Leitung A oder B der Busleitung 7 angeschlossene Komparator 8 erhält an seinen beiden Eingängen E_{1A}, E_{2A} bzw. E_{1B}, E_{2B} die in dem jeweiligen Verzögerungsglied 5a,5b verzögerten Messsignale S_{I}. Da die Verzögerung τ beider Verzögerungsglieder 5a,5b gleich ist, entsteht kein Differenzsignal am Eingang E_{1A}, E_{2A} bzw. E_{1B}, E_{2B} des entsprechenden Komparators 8.

Ein auf der Busleitung 7 infolge einer Störung reflektiertes Reflexionssignal S_{R} gelangt auf dem Rückweg zum Diagnoserepeater 1 einerseits vor dem Verzögerungsglied 5 direkt an den ersten Eingang E_{1A} bzw. E_{1B} des jeweiligen Komparators 8. Andererseits gelangt das Reflexionssignal S_{R} über die beiden Verzögerungsglieder 5b und 5a des Verzögerungsbausteins 5 mit der Verzögerungszeit 2_{τ} - und somit 2-fach verzögert - an den zweiten Eingang E_{2A} bzw. E_{2B} des jeweiligen gemeinsamen Komparators 8. Dadurch entsteht am Eingang E_{1A}, E_{2A} bzw. E_{1B}, E_{2B} des jeweiligen Komparators 8 ein Differenzsignal, das somit lediglich beim Reflexionssignal S_{R} infolge der unterschiedlichen Verzögerung des initiierenden Messsignals S_{I} gegenüber dem Reflexionssignal S_{R} entsteht. Aus der Zeitdifferenz zwischen dem Startzeitpunkt des vom Bustreiber 2 initiierten Messsignals S_{I} und dem Eintreffen des durch das am jeweiligen Komparator 8 auftretenden Differenzsignal detektierten Reflexionssignals S_{R} am Diagnoserepeater 1 wird die Entfernung der Störstelle oder des Leitungsfehlers vom Diagnoserepeater 1 ermittelt. Dazu wird die erfasste Laufzeit durch die 2-fache Leitungs- oder Kabellaufzeit, die beispielsweise 5ns/m beträgt, dividiert.

Diese passive Reflexionsmessung hat gegenüber der aktiven Reflexionsmessung den wesentlichen Vorteil, dass kein separates Testsignal oder ein separater Messsimpuls während des laufenden Busbetriebs auf die Busleitung 7 gegeben werden muss. Vielmehr wird das eigentliche Nutzsignal verwendet, um Störstellen oder Leitungsfehler F zu detektieren. Hierzu wird die Erkenntnis ausgenutzt, dass zwischen den als Nutzsignal über den Bus, d.h. über die Busleitung 7 geschickten Datentelegrammen stets eine definierte Pause vorgesehen ist, die ein Zeichen lang ist. Ein Datentelegramm besteht aus n Zeichen, wobei jedes Zeichen ein Startbit, acht Datenbits, ein Paritätsbit und ein Stopbit aufweist. Das Startbit ist stets low oder logisch "0", während das Stopbit stets high oder logisch "1" ist. Bei einer Datenrate von 12M Baud = 12 · 10⁶Bit/s folgt, dass 1Bit gleich 83ns lang ist.

Beim PROFIBUS als Feldbus ist praktisch festgelegt, dass zwischen zwei Datentelegrammen stets eine ein Zeichen lange Pause eingehalten wird. Diese Pause ist lang genug, um zu vermeiden, dass sich die Folge der mit dem initiierenden Signal S_{I} ausgesendeten Datentelegramme mit der Folge der dadurch ausgelösten, in entgegengesetzter Richtung laufenden Reflexionen derart überlagern, dass nicht mehr unterschieden werden kann, welches Datentelegramm die erste Reflexion und damit den Anfang des Reflexionssignals S_{R} ausgelöst hat.

Um sicherzustellen, dass das am Eingang E_{1A}, E_{2A} bzw. E_{1B}, E_{2B} des jeweiligen Komparators 8 erzeugte Differenzsignal unabhängig von der Entfernung der das Reflexionssignal erzeugenden Störstelle F vom Diagnoserepeater 1 die Komparatorschwelle zuverlässig überschreitet, wird diese mittels des Anpassungsgliedes 9 dynamisch angepasst. Hintergrund hierzu ist, dass die Komparatorschwelle für eine im Fernbereich erzeugte Reflexion, deren Reflexionssignal S_{R} entsprechend schwach am Komparator 8 ankommt, zu hoch ist. Da andererseits das Nutzsignal, d.h. das Startbit des ersten Zeichens eines Datentelegramms als initiierendes Messsignal S_{I} für die passive Reflexionsmessung herangezogen wird und eine der entsprechenden Startbitflanke vorangehende Einschaltflanke infolge einer Einschaltung des Bustreibers 2 des Diagnoserepeaters 1 ebenfalls eine Reflexion verursacht, die von der Reflexion der Startbitflanke unterschieden werden muss, muss die Komparatorschwelle eine Mindesthöhe aufweisen. Diese Mindestschwellenhöhe bedingt jedoch, dass ein pegelmäßig unter diesem Schwellwert liegendes Reflexionssignal S_{R} aus dem Fernbereich vom Komparator 8 nicht detektiert wird. Daher wird mit dem Auftreten der Startbitflanke, die den Startzeitpunkt der Laufzeitmessung festlegt, die Ansprechschwelle S des Komparators 8 über die Zeit bzw. über die Entfernung nach einer vorgegebenen Funktion, vorzugsweise exponentiell, heruntergesetzt.

Erkanntermaßen ist die Einschaltflanke stets kleiner als die Startbitflanke. Beim PROFIBUS stehen diese beiden Flanken im Verhältnis von etwa eins zu drei, so dass eine Reflexion infolge der Startbitflanke etwa dreimal so groß ist wie eine Reflexion infolge der Einschaltflanke. Die absolute Größe oder Stärke einer Reflexion hängt im Wesentlichen vom Reflexionsfaktor der Störstelle F, d.h. vom Ort des Leitungsfehlers und von der Entfernung der Störstelle F von der Messeinrichtung oder -schaltung 4 ab. So nimmt der Reflexionsfaktor mit abnehmender Reflexion ab und die ohmschen Verluste steigen mit zunehmender Entfernung.

Wird daher die Empfindlichkeit der Meßschaltung 4 über die Zeit verändert, so lassen sich diese Effekte ausgleichen. Die Empfindlichkeit der Meßschaltung 4 wird dabei derart eingestellt, dass die Einschaltflanke unabhängig vom Reflexionsfaktor und von der Entfernung keine detektierbare Reflexion auslösen kann. Dadurch ergibt sich eine zumindest annähernd exponentiell abfallende Empfindlichkeit der Meßschaltung 4 und damit eine entsprechend exponentiell abfallende Ansprechschwelle S des Komparators 8, so dass lediglich die Startbitflanke des initiierenden Signals S_{I} eine detektierbare Reflexion auslösen kann.

Um die Empfindlichkeit der Messschaltung 4 zu erhöhen, wird zusätzlich eine zweite Schwelle S' eingeführt. Diese ist derart bemessen, dass die Startbitflanke immer eine Reflexion auslöst, wenn die Einschaltflanke eine Reflexion auslöst, die größer ist als die Reflexion infolge der Startbitflanke. Mit anderen Worten: Die exponentiell verlaufende erste Schwelle S ist derart bemessen, dass die Einschaltflanke nie eine detektierbare Reflexion auslöst. Die zweite Schwelle S' ist derart bemessen, dass diese von einer Reflexion auf die Einschaltflanke nur dann überschritten wird, wenn gleichzeitig die erste Schwelle S von der Reflexion auf die Startbitflanke überschritten wird. Durch dieses quasi passive Mithören des Diagnoserepeaters 1 auf der Busleitung 7 ist eindeutig feststellbar, in welchem Abstand vom Diagnose-repeater 1 sich eine Störstelle oder ein Leitungsfehler F, z. B. ein Kurzschluß oder eine Leitungsunterbrechung, auf oder entlang der Busleitung 7 befindet.

Der Bustreiber 2 ist vorzugsweise ein RS485-Treiberbaustein. Diesem kann eine Dämpfungsschaltung zur Dämpfung der Einschaltflanke zugeordnet sein, wie dies ist in der zum Anmeldungszeitpunkt noch nicht veröffentlichten deutschen Patentanmeldung vom 18.02.2000 mit dem amtlichen Aktenzeichen 10007342.5 beschrieben ist. Diese Dämpfungsschaltung ist zweckmäßigerweise zusätzlich zu der beschriebenen dynamischen Anpassung der Komparatorschwelle S vorgesehen.

FIG 2 zeigt einen Ausschnitt aus einem komplexeren Bussystem 10 mit einem zwei Messschaltungen 4 aufweisenden Diagnoserepeater 1. Der Diagnoserepeater 1 verbindet zwei Bussegmente A1/B1 und A2/B2 miteinander. Jedes Bussegment umfasst eine Anzahl von Busteilnehmern Tₙ, wobei im Ausführungsbeispiel lediglich das Bussegment A1/B1 mit Teilnehmern T11 bis T13 belegt ist. Dem Busteilnehmer T13 ist ein Abschlusswiderstand 11 zugeschaltet. Das Bussegment A1/B1 weist einen Messinitiator 12 als aktiven Busteilnehmer T12 auf, während der Diagnoserepeater 1 passiver Busteilnehmer T10 ist.

Die Topologieermittlung des Bussystems 10 wird ebenfalls mittels einer Reflexionsmessung durchgeführt. Dabei wird die Tatsache ausgenutzt, dass sich ein sendender Busteilnehmer Tₙ am Bus oder an der Busleitung 7 ebenso verhält, wie eine Störstelle F. Ein sendender Busteilnehmer Tₙ verringert nämlich seinen Innenwiderstand beim Senden von ∞ auf etwa 40Ω. Wird nun ein Messimpuls auf die Busleitung 7 gegeben, dann wird dieser Messimpuls von einem sendenden Busteilnehmer Tₙ reflektiert.

Ein Busteilnehmer Tₙ wird zum Senden veranlasst, indem dieser vom Messinitiator 12 mit einem Messimpuls, einem sogenannten hochprioren SRD mit DSAP = 3FH ohne Daten angesprochen wird. Dieses Messtelegramm wird nachfolgend als SRD-Messtelegramm bezeichnet. Verhält sich der angesprochene Busteilnehmer Tₙ normkonform, so antwortet dieser mit einem Antwortsignal, einem sogenannten RS (FC = x3H), dass nachfolgend als RS-Messtelegramm bezeichnet wird.

Während ein Busteilnehmer Tₙ auf ein SRD-Messtelegramm mit einem SR-Messtelegramm antwortet, sendet der Diagnoserepeater 1 einen Messimpuls, der von dem sendenden Teilnehmer Tₙ reflektiert wird. Aus dem Zeitraum zwischen dem Senden des Messimpulses und dem Eintreffen der Reflexion bestimmt der Diagnoserepeater 1 die Entfernung des Busteilnehmers Tₙ. Dies erfolgt wiederum analog durch Erfassung der Zeitdifferenz zwischen dem Aussenden des Messsignals und dem Eintreffen des Reflexionssignals am Diagnoserepeater 1, das wiederum bei Auftreten eines entsprechenden Differenzsignals am jeweiligen Komparator 8 der Messschaltung 4 detektiert wird. Aus der durch die 2-fach Leitungs- oder Kabellaufzeit dividierten Laufzeit wird dann die Entfernung des jeweiligen Busteilnehmers Tₙ vom Diagnoserepeater 1 ermittelt.

Der Diagnoserepeater 1 speichert die ermittelten Entfernungen lₙ in einer in FIG 3 dargestellten Topologietabelle 13. In der Topologietabelle 13 sind alle möglichen Busteilnehmer Tₙ des Bussystems 10 enthalten. Beim sogenannten PROFIBUS-DP-Netwerk, das eine Vielzahl von Bussegmenten Aₙ/Bₙ umfassen kann, können insgesamt 127 Teilnehmer T₀ bis T₁₂₆ innerhalb des Bussystems 10 vorgesehen sein. Ein Bussegment Aₙ/Bₙ ist dabei ein Leitungsstück oder -abschnitt der Busleitung 7, an dem bis zu 32 Netzkomponenten oder Teilnehmer Tₙ angeschlossen sein können. Die Leitungslänge des jeweiligen Bussegmentes Aₙ/Bₙ ist dabei - abhängig von der Baudrate der Datenübertragung - begrenzt.

Wie in FIG 2 angedeutet, werden die einzelnen Segmente Aₙ/Bₙ mittels Leitungstreibern oder Leitungsverstärkern - sogenannten Repeatern - verbunden, wobei diese Repeater auch gleichzeitig zur Realisierung von Verzweigungen im Netzwerk dienen. Ein solcher Repeater ist im Ausführungsbeispiel der Diagnoserepeater 1, der zusätzlich zur Repeaterfunktion auch für zumindest ein Bussegment Aₙ/Bₙ die Messschaltung 4 mit dem Abschlusswiderstand 6 zur Reflexionsmessung aufweist.

In die Topologietabelle 13 werden alle Busteilnehmer Tₙ hinsichtlich deren Status und deren Position am jeweiligen Bussegment Aₙ/Bₙ sowie hinsichtlich deren Entfernung vom Diagnoserepeater 1 hinterlegt. Der Status eines noch nicht ausgemessenen Busteilnehmers Tₙ ist offen, während ausgemessene Busteilnehmer Tₙ den Status "gefunden" oder "nicht gefunden" haben. Im Ausführungsbeispiel ist vorausgesetzt, dass am Bussegment A2/B2 keine Busteilnehmer Tₙ hängen und alle Busteilnehmer Tₙ am Bussegment A1/B1 ausgemessen sind. Der Diagnoserepeater 1 als Busteilnehmer T10 sitzt sowohl am Bussegment A1/B1 als auch am Bussegment A2/B2 und hat von sich selbst die Entfernung L₁₀ = 0m.

Wird im Anschluss an die Ermittlung der Bustopologie die Entfernung einer Störstelle, die in FIG 2 durch den Pfeil F auf der Busleitung 7 des Bussegments A1/B1 dargestellt ist, ermittelt, so kann anhand der Topologietabelle 13 festgestellt werden, zwischen welchen Busteilnehmern Tₙ diese Störstelle oder der Leitungsfehler F liegt. Im Ausführungsbeispiel liegt die Störstelle F zwischen dem Busteilnehmer T11, dessen Entfernung vom Diagnoserepeater 1 l₁₁ = 5m beträgt, und dem Busteilnehmer T12, d.h. dem Messinitiator 12, dessen Entfernung vom Diagnoserepeater 1 l₁₂ = 10m beträgt. Die exakte Entfernung l_{F} der Störstelle F vom Diagnoserepeater 1 wird mittels der oben beschriebenen Reflexionsmessung ermittelt.

Um in bestimmten Fällen, insbesondere bei Störung des Telegrammverkehrs, bei der zum Beispiel im Falle eines Kurzschlusses oder eines Schwebezustandes die Leitung A oder B der Busleitung 7 physikalisch einen Ruhepegel nicht mehr erreicht, dennoch eine Fehlererkennung und somit eine Leitungsdiagnose zu ermöglichen, kann die Messschaltung 4 nach Ablauf einer bestimmten Ruhezeit die Busleitung 7 auch selbständig, d. h. aktiv ausmessen. Hierzu sendet der Diagnoserepeater 1 einen Messimpuls zur aktiven Reflexionsmessung aus. Aus der Zeit zwischen dem Senden des aktiven Messimpulses und dem Eintreffen der Reflexion lässt sich wiederum analog die Entfernung der Störstelle F ermitteln.

Diese aktive Reflexionsmessung eignet sich besonders für den Fall, dass sich kein Messinitiator 12, d.h. kein Telegrammsender außerhalb des gestörten Bussegmentes Aₙ/Bₙ befindet. Die passive Reflexionsmessung kann dann weiterhin genutzt werden. Lediglich in Fällen, in denen der Busverkehr z.B. aufgrund eines Kurzschlusses zusammengebrochen ist, wird über die aktive Reflexionsmessung die Lücke geschlossen. Zudem kann mittels dieser aktiven Reflexionsmessung die Inbetriebnahme einer Anlage, in der das Bussystem 10 eingesetzt ist, erheblich vereinfacht werden.

## Patentansprüche

1. Verfahren zur Leitungsdiagnose eines Bussystems (10) nach dem Prinzip der Reflexionsmessung,
- bei dem ein von einem Bustreiber (2) ausgesendetes Signal (S_{I}) parallel ein ausgangsseitig mit mindestens einer Busleitung (7) verbundenes erstes Verzögerungsglied (5a) und ein ausgangsseitig mit einem Abschlusswiderstand (6) beschaltetes zweites Verzögerungsglied (5b) durchläuft, und
- bei dem ein auf einer Busleitung (7) erzeugtes Reflexionssignal (S_{R}) an einen ersten Eingang (E_{1A}, E_{1B}) eines Komparators (8) direkt und an dessen zweiten Eingang (E_{2A}, E_{2B}) nach Durchlaufen der beiden Verzögerungsglieder (5a,5b) geführt und infolge des dabei am Komparator (8) entstehenden Differenzsignals detektiert wird.

2. Verfahren nach Anspruch 1, bei dem aus einer Laufzeitmessung zwischen dem Startzeitpunkt des ausgesendeten Signals (S_{I}) und der Detektion des Reflexionssignals (S_{R}) der Fehlerort einer Leitungsstörung (14) bestimmt wird.

3. Verfahren nach Anspruch 1 oder 2, bei dem ein vom Bustreiber (2) gesendetes Datentelegramm als Signal (S_{I}) zur Reflexionsmessung verwendet wird.

4. Verfahren nach Anspruch 3, bei dem das Startbit des ersten Zeichens des Datentelegramms als initiierendes Signal (S_{I}) herangezogen wird.

5. Verfahren nach einem der Ansprüche 1 bis 4, bei dem eine Ansprechschwelle (S) des Komparators (8) beginnend mit dem Startzeitpunkt des ausgesendeten Signals (S_{I}) nach einer vorgegebenen Funktion herabgesetzt wird.

6. Verfahren nach einem der Ansprüche 1 bis 5, bei dem einem oder jedem Busteilnehmer (Tₙ) des Bussystems (10) über die Busleitung (7) ein Messtelegramm (S_{M}) und anschließend ein Messsignal (S'_{I}) gesendet wird, das vom antwortenden Busteilnehmer (Tₙ) reflektiert wird, wobei aus der Zeitspanne zwischen dem Senden des Messsignals (S'_{I}) und dem Eintreffen des Reflexionssignals (S_{R}) die Position dieses Busteilnehmers (Tₙ) innerhalb des Bussystems (10) ermittelt wird.

7. Verfahren nach Anspruch 6, bei dem die relative Position des antwortenden Busteilnehmers (Tₙ) in einer Topologietabelle (13) hinterlegt wird.

8. Verfahren nach Anspruch 7, bei dem anhand der Topologietabelle (13) der Fehlerort eines detektierten Leitungsfehlers (F) zwischen zwei Busteilnehmern (Tₙ) ermittelt wird.

9. Vorrichtung zur Leitungsdiagnose eines Bussystems (10), das mindestens eine mit einem Bustreiber (2) eines Busteilnehmers (1) verbundene Busleitung (7) aufweist,
- wobei der Busteilnehmer (1) eine Messschaltung (4) nach Art einer Gabelschaltung mit zwischen dem Bustreiber (2) und der Busleitung (7) einem mit dieser verbundenen ersten Verzögerungsglied (5a) und mit einem mit einem Abschlusswiderstand (6) beschalteten zweiten Verzögerungsglied (5b) aufweist, und
- wobei die Verzögerungsglieder (5a,5b) ausgangsseitig mit einem Eingang (E_{1A}, E_{2A}; E_{1B}, E_{2B}) mindestens eines gemeinsamen Komparators (8) zum Erkennen von Reflexionen auf der jeweiligen Busleitung (7) verbunden sind.

10. Vorrichtung nach Anspruch 9, bei der die Messschaltung (4) über die Busleitung (7) mit allen Busteilnehmern (Tₙ) eines Bussegmentes (Aₙ/Bₙ) des Bussystems (10) verbunden ist.

11. Vorrichtung nach Anspruch 9 oder 10, mit einem Messinitiator (12) zum Senden eines Messtelegramms an den oder jeden Busteilnehmer (Tₙ), wobei der die Messschaltung (4) aufweisende Busteilnehmer (1) während des Antwortens eines vom Messinitiator (12) angesprochenen Busteilnehmers (Tₙ) an diesen ein Messsignal (S'_{I}) sendet und aus der Zeitspanne zwischen dem Senden des Messsignals (S'_{I}) und dem Eintreffen des vom angesprochenen Busteilnehmer (Tₙ) reflektierten Reflexionssignals (S_{R}) dessen Entfernung (lₙ) bestimmt.

12. Vorrichtung nach einem der Ansprüche 9 bis 11, mit einem dem Komparator (8) vorgeschalteten Anpassungsglied (9) zur zeit- oder wegabhängigen Änderung der Ansprechschwelle (S) des Komparators (8).

## Claims

1. Method for line diagnosis of a bus system (10) according to the principle of reflection measurement,
- in which a signal (S_{I}) sent out by a bus driver (2) passes in parallel through a first delay element connected to at least one bus line (7) and through a second delay element (5b) wired on the output side with a terminating resistor (6), and
- in which a reflection signal (S_{R}) created on a bus line (7) is routed directly to a first input (E_{1A}, E_{1B}) of a comparator (8) and to its second input (E_{2A}, E_{2B}) after passing through the two delay elements (5a, 5b) and is detected in this case as a result of the difference signal arising at the comparator (8).

2. Method in accordance with claim 1, in which the location of a line fault (14) is detected by measurement the delay time between start time of the signal (S_{I}) sent out and the detection of the reflection signal (S_{R}).

3. Method in accordance with claim 1 or 2, in which a data telegram sent by the bus driver (2) as a signal (S_{I}) is used for reflection measurement.

4. Method in accordance with claim 3, in which the start bit of the first character of the data telegram is employed as the initiating signal (S_{I}) .

5. Method in accordance with one of the claims 1 to 4, in which a response threshold (S) of the comparator (8) is reduced in accordance with a predetermined function beginning with the start time of the signal (S_{I}) sent out.

6. Method in accordance with one of the claims 1 to 5, in which, for one or for each bus user (Tₙ) of the bus system (10) a measurement telegram (S_{M}) and subsequently a measurement signal (S'₁) is sent over the bus line (7) which is reflected by the answering bus user (Tₙ), with the position of this bus user (T0) within the bus system (10) being determined from the from the length of time between the sending of the measurement signal (S'_{I}) and the arrival of the reflection signal (S_{R}).

7. Method in accordance with claim 6, in which the relative position of the answering bus user (Tₙ) is stored in a topology table (13).

8. Method in accordance with claim 7, in which the error location of a detected line fault (F) between two bus users (Tₙ) is determined on the basis of the topology table (13).

9. Device for line diagnosis of a bus system (10) which features at least one bus line (7) connected to a bus driver (2) of a bus user (1),
- with the bus user (1) having a measurement circuit (4) in the form of a hybrid circuit with a first delay element (5a) connected between the bus driver (2) and the bus line (7) and with a second delay element (5b) wired with a terminating resistor (6), and
- with the delay elements (5a,5b) being connected on the output-side with an input (E_{1A}, E_{2A}; E_{1B}, E_{2B}) of at least one common comparator (8) for detecting reflections on the respective bus line (7).

10. Device in accordance with claim 9, in which the measurement circuit (4) is connected via the bus line (7) to all bus users (Tₙ) of a bus segment (Aₙ/Bₙ) of the bus system (10).

11. Device in accordance with claim 9 or 10, with a measurement initiator (12) for transmission of a measurement telegram to the bus user or to each bus user (Tₙ), with the bus user (1) featuring the measurement circuit (4) during the response by a bus user (Tₙ) addressed by the measurement initiator (12) sending this user a measurement signal (S'_{I}) and determining from the length of time between the sending of the measurement signal (S'_{I}) and the arrival of the reflection signal (S_{R}) reflected from the addressed bus user (Tₙ) its distance (1ₙ).

12. Device according to one of the claims 9 to 11, with an adaptation element (9) connected upstream from the comparator (8) for changing of the response threshold (S) of the comparator (8) as a function of time or distance.

## Revendications

1. Procédé pour le diagnostic de ligne d'un système de bus (10) selon le principe de la mesure de réflexion,
- dans lequel un signal (S_{I}) émis par un pilote de bus (2) traverse en parallèle un premier élément retardateur (5a) relié en sortie à au moins une ligne de bus (7) et un deuxième élément retardateur (5b) relié en sortie à une résistance de terminaison (6), et
- dans lequel un signal réfléchi (S_{R}) produit sur une ligne de bus (7) est envoyé d'une part directement à une première entrée (E_{1A}, E_{1B}) d'un comparateur (8) et après passage dans les deux éléments retardateurs (5a, 5b) à la deuxième entrée (E_{2A}, E_{2B}) dudit comparateur et est détecté suite à la différence de signal apparaissant alors au comparateur (8).

2. Procédé selon la revendication 1, dans lequel on détermine l'endroit d'une perturbation de ligne (14) à partir d'une mesure de temps de propagation entre l'instant de départ du signal émis (S_{I}) et la détection du signal réfléchi (S_{R}).

3. Procédé selon la revendication 1 ou 2, dans lequel on utilise un télégramme de données émis par le pilote de bus (2) comme signal (S_{I}) pour la mesure de réflexion.

4. Procédé selon la revendication 3, dans lequel on exploite le bit de début du premier signe du télégramme de données comme signal déclencheur (S_{I}).

5. Procédé selon l'une des revendications 1 à 4, dans lequel on diminue un seuil de réponse (S) du comparateur (8) en commençant par l'instant de début du signal émis (S_{I}) suivant une fonction prescrite.

6. Procédé selon l'une des revendications 1 à 5, dans lequel on envoie à un ou à chaque utilisateur de bus (Tₙ) du système de bus (10) par l'intermédiaire de la ligne de bus (7) un télégramme de mesure (S_{M}) puis un signal de mesure (S'_{I}) qui est réfléchi par l'utilisateur de bus (Tₙ) qui répond, la position de cet utilisateur de bus (Tₙ) à l'intérieur du système de bus (10) étant déterminée à partir de l'intervalle de temps entre l'émission du signal de mesure (S'_{I}) et l'arrivée du signal de réflexion (S_{R}).

7. Procédé selon la revendication 6, dans lequel on enregistre la position relative de l'utilisateur de bus (Tₙ) qui répond dans un tableau de topologie (13).

8. Procédé selon la revendication 7, dans lequel, à l'aide du tableau de topologie (13), on détermine l'endroit d'un défaut de ligne détecté (F) entre deux utilisateurs de bus (Tₙ).

9. Dispositif pour le diagnostic de ligne d'un système de bus (10) qui comporte au moins une ligne de bus (7) reliée à un pilote de bus (2) d'un utilisateur de bus (1),
- dans lequel l'utilisateur de bus (1) comporte un circuit de mesure (4) à la manière d'un termineur avec entre le pilote de bus (2) et la ligne de bus (7) un premier élément retardateur (5a) relié à celle-ci et avec un deuxième élément retardateur (5b) relié à une résistance de terminaison (6), et
- dans lequel les éléments retardateurs (5a, 5b) sont reliés en sortie à une entrée (E_{1A}, E_{2A} ; E_{1B}, E_{2B}) d'au moins un comparateur commun (8) pour la détection de réflexions sur la ligne de bus respective (7).

10. Dispositif selon la revendication 9, dans lequel le circuit de mesure (4) est relié par l'intermédiaire de la ligne de bus (7) à tous les utilisateurs de bus (Tₙ) d'un segment de bus (Aₙ / Bₙ) du système de bus (10).

11. Dispositif selon la revendication 9 ou 10, avec un déclencheur de mesure (12) pour l'émission d'un télégramme de mesure vers le ou chaque utilisateur de bus (Tₙ), l'utilisateur de bus (1) qui comporte le circuit de mesure (4) émettant pendant la réponse d'un utilisateur de bus (Tₙ) adressé par le déclencheur de mesure (12) un signal de mesure (S'_{I}) vers ledit utilisateur de bus et déterminant à partir de l'intervalle de temps entre l'émission du signal de mesure (S'_{I}) et l'arrivée du signal (S_{R}) réfléchi par l'utilisateur de bus (Tₙ) adressé l'éloignement (Iₙ) de celui-ci.

12. Dispositif selon l'une des revendications 9 à 11, avec un élément adaptateur (9) branché du côté amont du comparateur (8) et destiné à la modification du seuil de réponse (S) du comparateur (8) en fonction du temps ou du trajet.
